(19) Europäisches Patentamt / European Patent Office / Office européen des brevets

(11) **EP 1 562 694 B1**

(12) **FASCICULE DE BREVET EUROPEEN**

(45) Date de publication et mention de la délivrance du brevet:
**11.01.2012 Bulletin 2012/02**

(21) Numéro de dépôt: **03778408.9**

(22) Date de dépôt: **20.10.2003**

(51) Int Cl.:
***B01D 69/10*** *(2006.01)*   ***B01D 63/06*** *(2006.01)*

(86) Numéro de dépôt international:
**PCT/FR2003/003097**

(87) Numéro de publication internationale:
**WO 2004/039481 (13.05.2004 Gazette 2004/20)**

(54) **MEMBRANE POUR FILTRATION TANGENTIELLE ET SON PROCEDE DE FABRICATION**

QUERSTROMFILTRATIONSMEMBRAN UND VERFAHREN ZU IHRER HERSTELLUNG

MEMBRANE FOR TANGENTIAL FILTRATION AND PRODUCTION METHOD THEREOF

(84) Etats contractants désignés:
**AT BE BG CH CY CZ DE DK EE ES FI FR GB GR HU IE IT LI LU MC NL PT RO SE SI SK TR**

(30) Priorité: **25.10.2002 FR 0213359**

(43) Date de publication de la demande:
**17.08.2005 Bulletin 2005/33**

(73) Titulaire: **Technologies Avancees & Membranes Industrielles S.A.**
**26110 Nyons (FR)**

(72) Inventeur: **LESCOCHE, Philippe**
**F-84110 FAUCON (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
**EP-A- 0 870 534    EP-A- 1 074 291**

• **PATENT ABSTRACTS OF JAPAN vol. 1997, no. 02, 28 février 1997 (1997-02-28) & JP 08 266837 A (AMANO CORP), 15 octobre 1996 (1996-10-15)**

**Description**

La présente invention concerne le domaine technique de la séparation tangentielle mettant en oeuvre des éléments de séparation appelés généralement membranes réalisées à partir de matériaux inorganiques et constituées d'un support poreux délimitant au moins un canal de circulation pour un milieu fluide, sur la surface duquel est déposée au moins une couche séparatrice dont la nature et la morphologie sont adaptées pour assurer la séparation des molécules ou des particules contenues dans le milieu fluide à traiter.

L'objet de l'invention vise, plus précisément, la réalisation d'un support poreux.

L'objet de l'invention trouve une application particulièrement avantageuse dans le domaine de la nanofiltration, l'ultrafiltration, la microfiltration, la filtration ou l'osmose inverse.

D'une manière classique, une membrane se définit par l'association d'un support poreux en matière inorganique, telle qu'en céramique, et d'une ou plusieurs couches séparatrices en matière inorganique déposées sur la surface de chaque canal de circulation et liées entre elles et au support, par frittage. Ces membranes peuvent adopter différentes géométries. Le rôle des couches est d'assurer la séparation des espèces moléculaires ou particulaires, tandis que le rôle du support est de permettre, par sa résistance mécanique, la réalisation de couches de faible épaisseur.

Dans l'état de la technique, il est connu de nombreuses membranes réalisées à partir d'éléments de filtration à caractère tubulaire ou plan. Dans le domaine des membranes tubulaires, le support poreux rigide est de forme allongée en présentant une section transversale droite polygonale ou circulaire. Le support poreux est aménagé pour comporter au moins un et de préférence une série, de canaux parallèles entre eux et à l'axe longitudinal du support poreux, en présentant chacun une forme cylindrique. Les canaux communiquent, d'un côté, avec une chambre d'entrée pour le milieu fluide à traiter et, de l'autre côté, avec une chambre de sortie. La surface des canaux est recouverte d'au moins une couche séparatrice assurant la séparation des molécules ou des particules contenues dans le milieu fluide circulant à l'intérieur des canaux, selon un sens donné, d'une extrémité des canaux dite d'entrée à l'autre extrémité dite de sortie. Une telle membrane réalise, par effet tamis, une séparation des espèces moléculaires ou particulaires du produit à traiter, dans la mesure où toutes les particules ou molécules supérieures au diamètre des pores de la membrane sont arrêtées. Durant la séparation, le transfert du fluide s'effectue à travers la couche séparatrice, puis le fluide se répand dans la perméabilité du support pour se diriger vers la surface extérieure du support poreux. La partie du fluide à traiter ayant traversé la couche de séparation et le support poreux est appelée perméat et se trouve récupérée par une chambre de collecte entourant la membrane.

Dans le domaine technique des membranes à caractère plan, le support poreux se présente sous la forme d'un bloc dans lequel est aménagé au moins un, et en général une série de canaux superposés présentant chacun une section droite transversale polygonale généralement rectangulaire. La surface des canaux est recouverte d'au moins une couche séparatrice.

Suivant le principe de la filtration tangentielle, le fluide à traiter circule à grande vitesse sur la surface des canaux afin de générer une contrainte de cisaillement qui redisperse les matières déposées sur cette surface. Il apparaît ainsi un frottement du fluide sur la surface des canaux conduisant à l'existence d'une perte de charge qui varie linéairement en fonction de la longueur des canaux. Cette perte de charge dépend de paramètres dimensionnels tels que la longueur de la membrane, de son diamètre hydraulique et de paramètres expérimentaux, tels que la vitesse de circulation, la viscosité et la masse volumique du fluide à traiter.

Comme la force agissante de la filtration est une pression, il apparaît une variation décroissante de la pression du fluide à traiter le long des canaux. Un tel gradient de pression modifie l'écoulement transversal du perméat qui traverse la couche séparatrice, puis le corps poreux. Le débit du perméat est donc variable le long de la membrane. Ce gradient du débit du perméat conduit à une hétérogénéité de la séparation réalisée par la membrane faisant apparaître des régimes de séparation différents le long des canaux.

Pour tenter de remédier à ces inconvénients, le brevet US 4 105 547 décrit un appareil de filtration tangentielle mettant en oeuvre un système de compensation de la perte de charge longitudinale. Un tel système consiste à assurer la circulation du perméat tangentiellement à l'extérieur de la membrane, dans le même sens que le fluide à traiter circulant tangentiellement dans les canaux. La perte de charge de l'écoulement du perméat est identique à celle du fluide à traiter. Il apparaît donc une compensation entre les deux pertes de charge, de sorte que la pression est la même en tout point le long des canaux.

Le brevet **EP 0 333 753** est une amélioration de ce système. Il consiste à disposer dans le compartiment perméat des billes dans le but d'obtenir des pertes de charges identiques à celle du liquide à traiter avec un débit très faible de circulation.

Néanmoins, de tels appareils présentent l'inconvénient de nécessiter la mise en oeuvre d'une boucle de recirculation du perméat, ce qui complique considérablement la fabrication et accroît le coût énergétique lié au fonctionnement de cette boucle supplémentaire.

Pour remédier à ces inconvénients, le brevet **EP 0 870 534 B1** propose un support macroporeux dont la porosité externe est modifiée, de manière à faire apparaître un gradient de porosité tout le long de ce support. Ce gradient de porosité fait apparaître un gradient de perméabilité. En raison de la variation de la pression, le débit de perméat qui traverse la membrane devient constant. Si une telle solution permet de modifier uniquement le support, cette technique présente l'inconvénient de réduire la porosité externe du support facilitant ainsi l'accumulation des molécules ou des particules qui ont traversé la couche séparatrice et qui, statistiquement, peuvent être arrêtées par la partie du support à porosité réduite. Pratiquement, le diamètre des pores suivant une section droite transversale d'un tel support augmente puis diminue à sa périphérie, de sorte qu'il apparaît un risque d'accumulation pour les molécules ou particules. Une telle accumulation est susceptible de conduire à la destruction du support. Par ailleurs, la réduction de la porosité est effectuée uniquement sur la couronne externe du support poreux. Ainsi, la porosité du support, dans sa partie interne adjacente à la couche de séparation, n'est pas réduite. Aussi, durant l'opération de séparation, la pression à l'intérieur des canaux décroît selon le sens d'écoulement du fluide à traiter. Le perméat, après avoir traversé la couche séparatrice, se répand dans la porosité interne et s'écoule vers l'extérieur en recherchant une zone nécessitant moins d'énergie. Le perméat s'écoule alors principalement par la partie du support la plus poreuse. Dans ces conditions, le gradient de porosité ainsi réalisé conduit à l'apparition de débits de perméat hétérogènes suivant la longueur de la membrane.

La demande de brevet **EP 1 074 291** propose une solution permettant d'obtenir un débit de perméat homogène tout le long de la membrane. Cette solution consiste à déposer sur le support macroporeux une couche de séparation présentant un gradient d'épaisseur diminuant selon le sens de circulation du fluide à traiter. Dans ce cas, le support permet d'assurer la résistance mécanique sans participer à la résistance hydraulique de la membrane, tandis que la couche de séparation définit la perméabilité sans participer à la résistance mécanique.

L'objet de invention vise donc à proposer une autre solution permettant de remédier aux inconvénients énoncés ci-dessus en proposant une membrane de filtration tangentielle, adaptée pour obtenir un flux de perméat plus homogène le long de la membrane et ne présentant pas de zone fragile où s'accumulent des espèces du fluide à traiter, retenues par la membrane. La solution proposée par l'invention consiste à modifier le support poreux sur sa partie adjacente à la couche de séparation pour le faire participer à la perméabilité de la membrane.

Pour atteindre un tel objectif, la membrane pour filtration tangentielle d'un fluide à traiter selon invention, comporte un support poreux délimitant au moins un canal de circulation pour le fluide à traiter circulant dans un sens donné entre une entrée et une sortie, la surface interne du support poreux délimitant le canal étant recouverte par au moins une couche de séparation pour le fluide à traiter, une fraction appelée perméat traversant la couche de séparation et le support poreux. Le support présente un colmatage partiel variable s'étendant à partir de la surface interne du support sur laquelle la couche de séparation est déposée. Cedit colmatage crée, sur une tranche du support d'épaisseur constante donnée s'étendant à partir de la surface interne du support, un gradient de porosité moyenne, selon le sens de circulation du fluide à traiter, la porosité moyenne minimale étant située à l'entrée et la porosité moyenne maximale à la sortie.

L'objet de l'invention vise également à proposer un procédé de fabrication d'une membrane pour filtration tangentielle d'un fluide. Conformément à invention, un tel procédé comprend une étape consistant à modifier le support poreux par pénétration, à partir de la surface interne du support poreux délimitant le canal de circulation, de particules inorganiques de diamètre moyen inférieur au diamètre moyen **dp** des pores du support, de façon à obtenir sur une tranche d'épaisseur constante donnée s'étendant à partir de la surface interne du support, un gradient de porosité moyenne, selon le sens de circulation du fluide à traiter, la porosité moyenne minimale étant située à l'entrée et la porosité moyenne maximale à la sortie.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue en coupe transversale d'un exemple de réalisation d'une membrane conforme à l'invention.

La **fig. 2** est une vue en coupe longitudinale, d'une membrane prise sensiblement selon les lignes II-II de la **fig. 1**.

La **fig. 3** est une vue analogue à la **fig. 2** illustrant une autre variante d'une membrane selon l'invention.

Les **fig. 4** à **16** sont des tableaux donnant les mesures expérimentales, respectivement, pour une membrane de l'art antérieur et pour des membranes conformes à invention.

En préalable à la description de l'invention, il y a lieu de donner un certain nombre de définitions.

La porosité désigne le volume des pores du support par rapport au volume total apparent du support. La porosité est mesurée, par exemple, par porométrie mercure. Il s'agit d'un appareil qui envoie du mercure sous pression dans un échantillon poreux. Cet appareil donne la distribution des diamètres de pores mais également la porosité du corps poreux.

L'existence d'un gradient de porosité moyenne sur une tranche volumique d'épaisseur constante donnée signifie que, si cette tranche d'épaisseur constante est divisée en une série de volumes élémentaires égaux correspondant à des tronçons s'étendant transversalement par rapport à l'axe longitudinal de la tranche, la porosité moyenne de ces volumes élémentaires varie lorsque l'on se déplace le long de l'axe longitudinal de cette tranche.

La densité de flux par unité de pression et la perméabilité d'un support poreux traduisent la facilité qu'un milieu fluide a à traverser ledit support. La densité de flux, au sens de l'invention, désigne la quantité en $m^3$ de perméat traversant l'unité de surface (en $m^2$) de support par unité de temps (en s). La densité de flux par unité de pression est

donc mesurée en $m^3/m^2/s/Pa \times 10^{-12}$.

La perméabilité, au sens de l'invention, correspond à la densité de flux par unité de pression ramenée à l'épaisseur et est exprimée en $m^3/m^2/s/m/Pa \times 10^{-12}$.

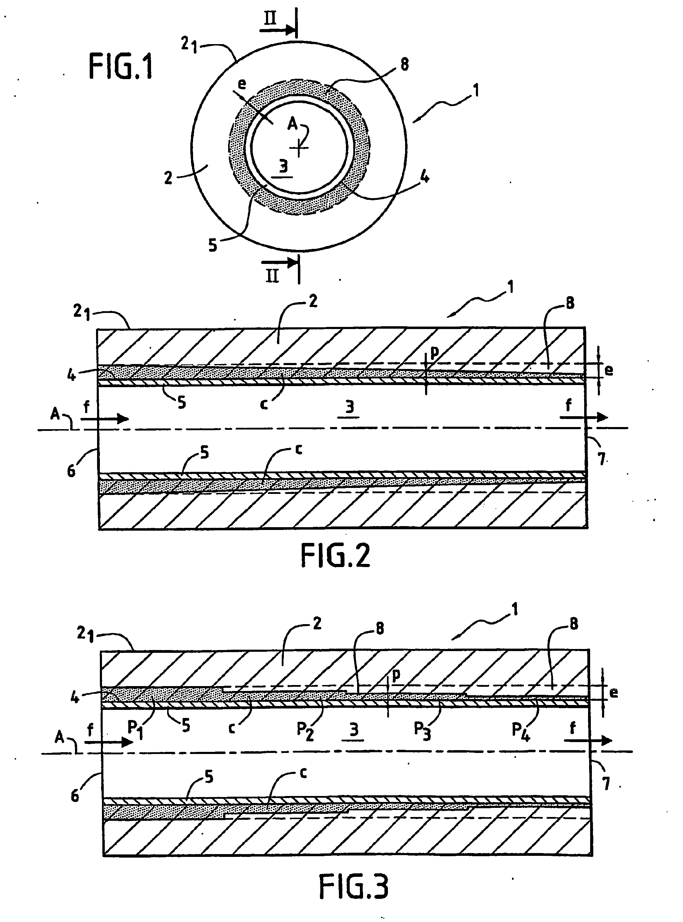

Tel que cela ressort des **fig. 1** et **2**, la membrane de filtration **1** conforme à l'invention est adaptée pour assurer la séparation ou la filtration de molécules ou de particules contenues dans un milieu fluide, de préférence liquide, de natures diverses, comportant une phase solide ou non. Dans l'exemple de réalisation illustré, la géométrie de la membrane de filtration **1** est de type tubulaire. Selon cet exemple, la membrane de filtration **1** comporte un support poreux **2** rigide inorganique, constitué dans une matière dont la résistance au transfert est adaptée à la séparation à effectuer. Le support poreux **2** est réalisé à partir de matériaux inorganiques, tels que des oxydes métalliques, du carbone ou des métaux. Dans cet exemple de réalisation, le support poreux **2** est réalisé sous une forme allongée s'étendant selon un axe central longitudinal **A**. Le support poreux **2** possède une section droite transversale polygonale ou, comme dans l'exemple illustré aux **fig.1** et **2**, une section transversale circulaire. Le support poreux **2** présente ainsi une surface externe **2₁** cylindrique de section circulaire.

Le support poreux **2** est aménagé pour comporter au moins un et, dans exemple illustré, un canal **3** réalisé parallèlement à l'axe **A** du support. Dans l'exemple illustré, le canal présente une section droite transversale à l'axe **A** du support, de forme cylindrique. Le canal **3** présente une surface interne **4** recouverte par au moins une couche de séparation **5**, destinée à être en contact avec le milieu fluide à traiter, circulant à l'intérieur du canal **3** selon un sens de circulation représenté par les flèches **f** permettant de déterminer une entrée **6** et une sortie **7** pour une telle membrane fonctionnant en mode tangentiel. La nature de la ou des couches séparatrices **5** est choisie en fonction du pouvoir de séparation ou de filtration à obtenir et forme, avec le support poreux **2**, une liaison intime de façon que la pression provenant du milieu liquide soit transmise au support poreux **2**. Cette ou ces couches peuvent être déposées à partir, par exemple, de suspensions contenant au moins un oxyde métallique classiquement utilisé dans la production des éléments de filtration minéraux. Cette ou ces couches sont soumises après séchage à une opération de frittage qui permet de les consolider et de les lier entre elles ainsi qu'au support poreux **2**. Une partie du milieu fluide traverse la couche séparatrice **5** et le support poreux **2**, de sorte que cette partie traitée du fluide, appelée perméat, s'écoule par la surface externe **2₁** du support poreux.

Conformément à l'invention, la partie du support **2** adjacente à la couche de séparation **5** est modifiée par rapport au reste du support. Au voisinage de la couche de séparation **5**, le support **2** présente, un colmatage partiel variable qui s'étend, le long du support, à partir de la surface interne **4** du support **2** sur laquelle la couche de séparation **5** est déposée. Ce colmatage est dit « partiel », car le support n'est pas totalement colmaté puisqu'il laisse passer le perméat. Ce colmatage est dit « variable » car il varie lorsque l'on se déplace le long du support **2** et crée ainsi, sur une tranche **8** d'épaisseur constante donnée e s'étendant à partir de la surface interne **4** du support **2**, un gradient de porosité moyenne, selon le sens de circulation **f** du fluide à traiter. La partie de la tranche **8** la plus colmatée présentant la porosité moyenne la plus faible est située à l'entrée **6** de la membrane, tandis que la partie la moins colmatée présentant la porosité moyenne la plus importante est située à la sortie **7** de la membrane. Par conséquent, la densité de flux par unité de pression augmente le long du support **2**, entre l'entrée **6** et la sortie **7.** Aussi, le débit de perméat traversant la couche de séparation **5** et le support poreux **2** est constant le long de la membrane, dans la mesure où le gradient de porosité moyenne et donc le gradient de densité de flux par unité de pression varient de manière inversement proportionnelle à la pression exercée par le milieu fluide à séparer. En effet, la pression du fluide à traiter diminue selon le sens de circulation **f** du fluide, à savoir de l'entrée **6** jusqu'à la sortie **7** de la membrane. Le gradient de densité de flux par unité de pression de la couche est donc choisi de manière à obtenir un débit de perméat constant sur toute la longueur de la membrane.

De plus, l'invention présente un autre intérêt. A l'intérieur du support décrit dans le brevet EP 0 870 534 B1, le diamètre moyen des pores augmente puis diminue lorsque l'on se déplace transversalement au sens de circulation du fluide, de la couche de séparation vers la surface externe du support, favorisant ainsi des zones d'accumulation. Au contraire, selon l'invention la porosité moyenne du support augmente au sein du support **2,** et en particulier au sein de la tranche **8,** quand on se déplace, transversalement au sens de circulation **f** du fluide à traiter, de la surface interne **4** du support **2** vers la surface externe **2₁** de ce dernier.

Le gradient de porosité moyenne est réalisé par pénétration à partir de la surface interne **4** du support **2** de particules de diamètre moyen inférieur au diamètre moyen des pores du support **2,** ce qui permet d'obtenir un colmatage c partiel de la tranche **8** du support **2**. Cette tranche **8** s'étend à partir de la surface interne **4** du support **2** destinée à recevoir la couche de séparation **5**. La tranche **8** est une tranche volumique d'épaisseur constante **e.** Tel que présenté à la **fig.2**, l'épaisseur e correspond à la profondeur maximale du colmatage c, profondeur déterminée à partir de la surface interne **4** du support **2** sur laquelle la couche de séparation **5** est déposée. Ce colmatage c correspondant à la pénétration des particules s'effectue sur une profondeur **p** qui dépend de la taille, c'est à dire du diamètre des particules, et des conditions expérimentales de pénétration. En général, la profondeur **p** de la pénétration n'excède pas quelques dizaines de μm, valeur atteinte pour les particules les plus fines.

L'existence d'un gradient de porosité moyenne sur la tranche **8** d'épaisseur constante **e** signifie que, si cette tranche **8** est divisée en une série de volumes élémentaires égaux correspondant à des tronçons s'étendant transversalement par rapport au sens **f** de circulation du fluide, la moyenne des porosités obtenue pour ces volumes élémentaires augmente lorsque l'on se déplace longitudinalement dans le sens de circulation **f** du fluide à traiter.

L'existence d'un gradient de porosité moyenne croissant au niveau de la tranche **8** définie ci-dessus se traduira par l'existence d'un gradient de densité de flux par unité de pression croissant le long du support **2**.

La présence des particules à l'intérieur de la porosité du support peut avoir deux effets :

- le premier correspond à une réduction de la porosité du support,
- le deuxième à une diminution du diamètre moyen des pores du support.

Ces deux effets ont chacun pour conséquence de réduire la densité de flux par unité de pression du support.

Pour obtenir un gradient de densité de flux par unité de pression le long du support **2**, entre l'entrée **6** de la membrane fonctionnant en mode tangentiel et sa sortie **7**, l'invention prévoit de faire varier :

- soit la profondeur **p** de pénétration des particules le long de la membrane. Dans ce cas, les particules utilisées ont toutes le même diamètre moyen, la variation de la profondeur **p** de pénétration étant acquise par modification des paramètres du dépôt,
- soit la porosité et le diamètre moyen des pores du support après pénétration. Dans ce cas, des particules de granulométrie différentes sont utilisées, la pénétration des particules les plus fines étant réalisées après celles des particules les plus grosses,
- soit par l'association des deux méthodes ci-dessus.

Selon une première variante de l'invention, la porosité moyenne peut augmenter sensiblement de manière continue le long de la tranche **8** d'épaisseur constante **e** entre l'entrée **6** et la sortie **7**. Dans ce cas, la densité de flux par unité de pression augmente également de manière sensiblement continue entre l'entrée **6** et la sortie **7**.

Tel que cela ressort plus précisément de l'exemple illustré à la **fig. 2**, ce gradient de porosité moyenne peut être obtenu en faisant pénétrer des particules à partir de la surface interne **4** du support selon une profondeur **p** qui diminue sensiblement de manière continue, selon le sens de circulation **f** du fluide à traiter. Il est à noter que sur les figures, le rapport dimensionnel entre la couche de séparation **5,** la tranche **8** et le support poreux **2** n'est pas respecté : la couche de séparation 5 et la tranche **8** ont été représentées avec des échelles plus grandes, afin d'illustrer l'objet de l'invention.

Selon une autre variante, la porosité moyenne peut augmenter, sur la tranche **8** du support 2 d'épaisseur constante **e,** par paliers $P_i$. Dans ce cas, la densité de flux par unité de pression augmente également par paliers $P_i$ entre l'entrée 6 et la sortie **7.**

Dans le cas d'une augmentation par paliers, la longueur des tronçons prise selon le sens de circulation **f** correspondant au volume élémentaire pour la mesure de la porosité moyenne et de la densité de flux par unité de pression correspond à la longueur des paliers $P_i$. La **fig. 3** illustre le cas où ce gradient de porosité moyenne est dû à un colmatage **c,** correspondant à une pénétration de particules selon un gradient de profondeur **p**. La profondeur **p** diminue par paliers $P_i$, selon le sens **f** de circulation du fluide à traiter, entre l'entrée 6 et la sortie 7. Dans l'exemple illustré, il existe quatre paliers $P_1$ à $P_4$ correspondant à quatre profondeurs **p** de pénétration. La profondeur **p** de pénétration sur le palier $P_1$ situé à l'entrée **6** est supérieure à la profondeur de pénétration du palier $P_2$ le plus proche et ainsi de suite pour les autres paliers consécutifs. Dans l'exemple illustré, la profondeur **p** de pénétration est constante pour chaque palier. Il pourrait également être prévu que la profondeur **p** de pénétration diminue progressivement sur chaque palier, dans le sens de circulation **f,** avec un saut de profondeur au niveau de la jonction entre deux paliers consécutifs. Lesdits paliers sont, de préférence, tous de longueur prise selon le sens de circulation sensiblement identique.

Il est à noter que les exemples décrits ci-dessus concernent une membrane monocanal comportant un canal de forme cylindrique de section droite transversale sensiblement ovoïde. Bien entendu, l'objet de l'invention peut être mis en oeuvre sur des membranes comportant un ou plusieurs canaux de formes variées et diverses. Dans le même sens, il est clair que l'objet de l'invention peut être appliqué à une membrane comportant au moins un canal **3** de section transversale polygonale, aménagé dans un bloc poreux afin de constituer une membrane du type plane. Dans ce type de membrane, le support poreux **2** comporte une série de canaux **3** superposés présentant chacun une section droite transversale rectangulaire et dont les parois sont recouvertes d'une couche séparatrice **5**. Dans le cas de membranes comportant plusieurs canaux, le support présente un colmatage partiel tel que ci-dessus défini, à proximité de chaque surface interne **4** délimitant un canal **3**. Le support présente donc une porosité modifiée, sur le volume adjacent à la surface interne **4**, volume situé soit entre un canal **3** et la surface externe $2_1$ du support, soit entre deux canaux **3**.

L'objet de l'invention vise également à proposer un procédé pour réaliser une membrane de filtration **1** telle que décrite ci-dessus. Un tel procédé comprend une étape consistant à modifier le support poreux **2** par pénétration, à partir de la surface interne **4** dudit support, de particules inorganiques, de diamètre moyen inférieur au diamètre moyen **dp** des pores du support **2**. Cette pénétration est réalisée de façon à obtenir, sur la tranche **8** d'épaisseur constante e, un gradient de porosité moyenne, selon le sens de circulation du fluide à traiter, la porosité moyenne minimale étant située à l'entrée et la porosité moyenne maximale à la sortie.

Par diamètre moyen inférieur au diamètre moyen dp des pores du support **2,** on entend de préférence que le diamètre moyen des particules inorganiques est compris entre **dp**/100 et **dp/2**.

La pénétration des particules à l'intérieur du support **2** est réalisée à l'aide d'une suspension défloculée de telles particules. La défloculation de la suspension est nécessaire afin d'éviter la formation d'agglomérats de particules et donc conserver des particules sous une forme individualisée capables de pénétrer à l'intérieur des pores du support. La suspension présente, de façon avantageuse, une faible viscosité.

De telles particules sont constituées d'un matériau inorganique tel que des oxydes métalliques, le matériau inorganique constitutif des particules inorganiques pouvant être identique à celui constituant le support et/ou la couche de séparation **5**.

L'étape de pénétration est suivie d'une étape de frittage qui permet de regrouper les particules présentes dans les pores du support solide **2** entraînant un grossissement et un amalgame desdites particules et fixant le colmatage du support poreux **2**. Pour réaliser un colmatage c partiel variable créant, selon le sens de circulation du fluide à traiter, un gradient de porosité moyenne, la porosité moyenne minimale étant située à l'entrée et la porosité moyenne maximale à la sortie, il convient d'effectuer une pénétration variable de particules inorganiques au sein de la tranche **8** du support poreux.

La description qui suit vise un procédé pour réaliser une membrane telle qu'illustrée à la **fig. 2**. Dans ce cas, la pénétration de particules de même granulométrie est réalisée à l'intérieur des pores de la tranche **8** sur une profondeur **p** mesurée à partir de la surface interne **4** du support **2** qui diminue selon le sens de circulation **f** du fluide à traiter. Une telle pénétration variable en fonction de la longueur du support peut être réalisée par la méthode de l'engobage. Cette méthode consiste à disposer le support poreux **2** verticalement et à remplir le canal **3** avec une suspension défloculée de particules inorganiques de diamètre moyen inférieur au diamètre moyen **dp** des pores du support par l'intermédiaire d'une pompe de type péristaltique et à vitesse de rotation variable. Le temps de remplissage du canal est appelé **Tr.** Le temps pendant lequel le support est maintenu rempli avec la suspension par action sur la vitesse de rotation de la pompe est appelé **Ta**. Le support est ensuite vidé par inversion du sens de rotation de la pompe, le temps de vidange étant appelé **Tv**. Les trois temps **Tr, Ta, Tv** définissent le temps de contact **Tc** entre chaque point de la surface interne **4** du support **2** et la suspension.

En un point **x** de la surface interne **4** du support **2** situé à une hauteur **h,** le temps de contact **Tc** avec la suspension est égal à :

$$\mathbf{Tc = (Tr + Ta + Tv) - Ss / Qpr * h - Ss / Qpv * h \quad (I)}$$

Où:

**Tr** = temps de remplissage
**Ta** = temps d'attente tube plein
**Tv** = temps de vidange
**Tc** = temps de contact
**Qpr** = débit de la pompe durant le remplissage
**Qpv** = débit de la pompe durant la vidange
**Ss** = section des canaux
**h** = hauteur de remplissage

La profondeur **p** de pénétration des particules à l'intérieur du support dépend du temps de contact **Tc** entre le support poreux **2** et la suspension. Aussi, il est prévu de vider les canaux **3** progressivement, en vue d'obtenir un temps de contact **Tc** entre la suspension de particules et le support **2** qui augmente progressivement et de façon sensiblement continue entre le haut du support correspondant à la sortie **7** et le bas du support correspondant à l'entrée **6**. Il peut ainsi être obtenu une profondeur **p** de pénétration qui augmente à partir de l'extrémité haute jusqu'à l'extrémité basse du support. Ainsi, en utilisant différentes valeurs du temps de contact **Tc,** en jouant sur **Tr**, **Ta** et **Tv** selon la relation **(I)**, il est possible de choisir la masse des particules inorganiques pénétrant à l'intérieur du support **2**.

Pour réaliser une membrane telle qu'illustrée à la **Fig. 3**, un procédé peut consister à diviser le canal **3** en une série de tronçons **Pi** de longueur sensiblement égale, par exemple au nombre de quatre **P₁** à **P₄** dans l'exemple illustré. La surface du canal 3 est ensuite mise en contact avec une suspension défloculée de particules de diamètre moyen inférieur au diamètre moyen **dp** des pores du support. D'une manière classique et bien connue, la profondeur **p** de pénétration est contrôlée par les paramètres de concentration de la suspension et du temps de contact entre la suspension et le support poreux **2**. Pour une même suspension, le temps de contact sera diminué du palier $P_4$ au palier $P_1$.

Une autre technique permettant d'obtenir un colmatage c variable est d'effectuer des pénétrations successives de particules inorganiques présentant des diamètres moyens différents, ces diamètres devant toujours être inférieurs au diamètre moyen des pores du support. En particulier, deux pénétrations successives peuvent être réalisées, une première à l'aide de particules inorganiques dont le diamètre moyen $d_1$ est compris entre **dp**/100 et **dp**/2, puis une deuxième réalisée avec des particules inorganiques dont le diamètre moyen $d_2$ est compris entre $d_1$/100 et $d_1$/2.

Bien entendu, la fabrication d'un support poreux comportant un colmatage partiel variable s'étendant à partir de la surface interne **4** peut être réalisée par d'autres procédés que ceux décrits ci-dessus. En choisissant le colmatage et donc la valeur du gradient de porosité moyenne et de densité de flux par unité de pression de la tranche **8** en fonction de la valeur du gradient de la pression du fluide à traiter circulant dans le canal **3**, un débit de pérmeat sensiblement constant le long du canal **3** de circulation pourra être obtenu.

Par ailleurs, selon un autre aspect de l'invention, il peut être prévu d'utiliser pour le colmatage des particules inorganiques identiques en dimension et en composition à celles utilisées pour la fabrication de la couche de séparation **5**. L'invention prévoit alors de réaliser pendant l'opération de pénétration des particules, un dépôt à la surface interne **4** de ce support **2**. Dans ces conditions, le colmatage du support et le dépôt de la couche de séparation **5** sont réalisés simultanément. Dans ce cas, la couche de séparation **5** pourra présenter une épaisseur diminuant selon le sens de circulation **f** du fluide à traiter, comme décrit dans EP 1 074 291.

Par contre, si les particules utilisées pour le colmatage sont différentes de celles utilisées pour la fabrication des couches séparatrices, l'invention prévoit alors d'éviter la formation d'un dépôt à la surface interne **4** du support poreux **2,** lors de la pénétration des particules inorganiques à l'intérieur du support **2**.

Dans les exemples qui suivent, un support monocanal de diamètre externe 10 mm et de diamètre interne 6 mm et de longueur 1200 mm est utilisé. Ce support poreux possède un diamètre moyen équivalent de pores de 5 $\mu$m.

Sur les parois du canal, on réalise tout d'abord un dépôt d'une suspension d'oxyde de titane qui permet après frittage d'obtenir un diamètre moyen équivalent pour ce dépôt de 1,5 $\mu$m.

Afin d'analyser l'homogénéité du dépôt, la membrane ainsi réalisée est découpée en 12 tronçons de longueur 10 cm, lesquels sont mesurés en perméabilité à l'eau. Cette membrane a été réalisée à titre de référence, en l'absence de colmatage.

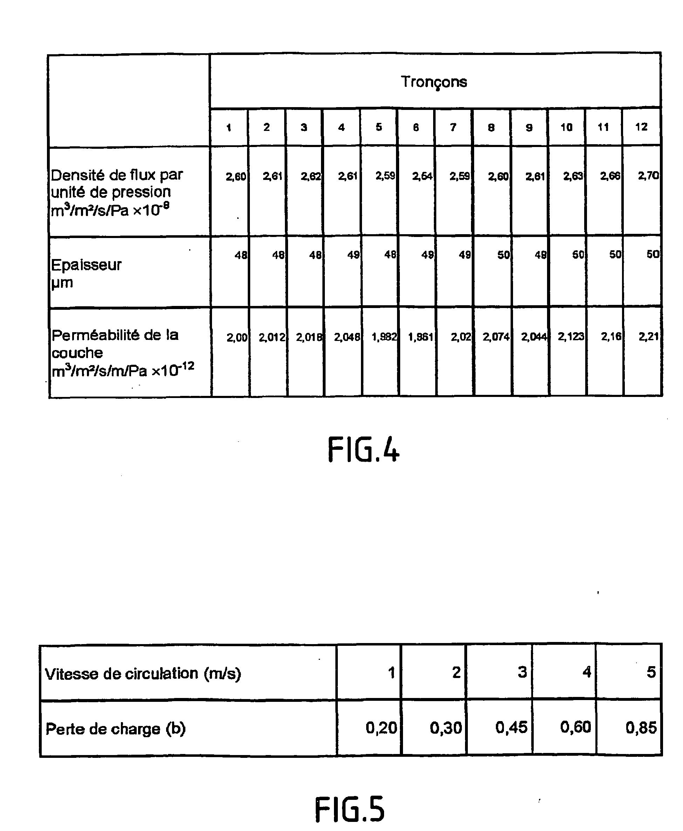

Le tableau selon la **Fig. 4** présente à partir d'eau comme fluide :

- la densité de flux par unité de pression mesurée pour chaque tronçon,
- l'épaisseur de la couche de diamètre moyen équivalent des pores de: 1,5 $\mu$m,
- la perméabilité de la couche déterminée en prenant pour le support une valeur de la densité de flux par unité de pression de 6,9 $\times 10^{-8}$.

Les valeurs présentées dans ce tableau montrent que les tronçons sont relativement homogènes en densité de flux, en épaisseur de couche et donc en perméabilité.

Les pertes de charges du fluide circulant à l'intérieur d'une membrane telle que ci-dessus d'une longueur de 1178 mm en fonction de la vitesse de circulation sont présentées dans le tableau de la **Fig. 5.**

A titre de référence, les débits de filtrat de cette membrane en fonction de la position du prélèvement sur la membrane sont également donnés. Ces mesures sont réalisées avec un appareil composé d'un carter TAMI CéRAM Inside ref CLC120100100 tronçonné en quatre parties égales. Sur chacune des parties sont disposées :

- des sorties perméat à proximité de chaque extrémité,
- des raccords clamps DN 38 aux entrées/sorties disponibles de chaque tronçon.

Les joints qui permettent de faire l'étanchéité sur les raccords clamps sont particuliers en ce qu'ils comportent un trou de diamètre 9,5 mm en leurs centres. Les quatre carters sont reliés ensemble par l'intermédiaire de leurs joints particuliers.

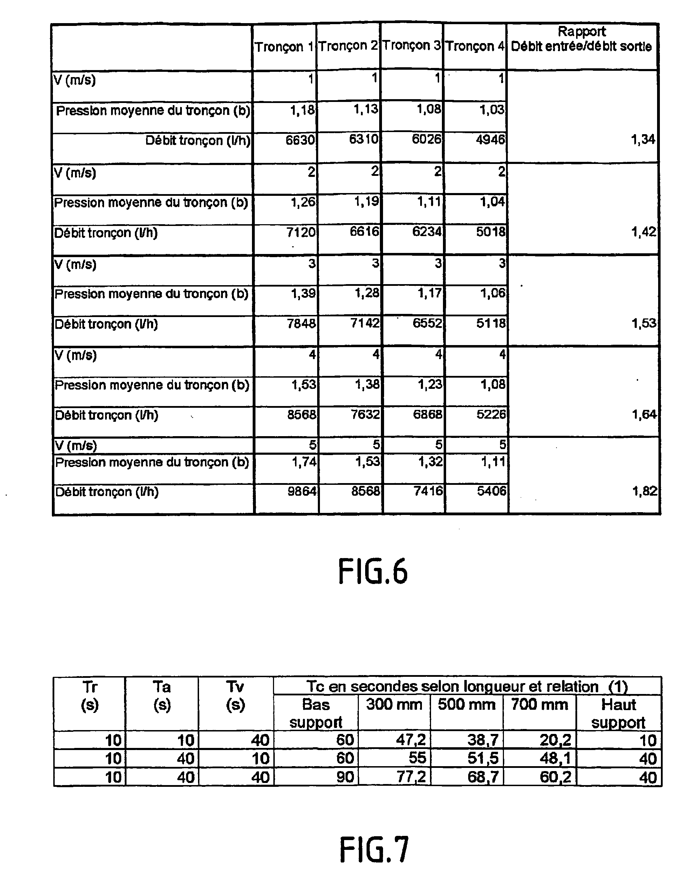

La membrane de 1178 mm de long est disposée à l'intérieur de ces quatre carters, et l'ensemble est ensuite relié à une pompe permettant d'obtenir des débits de circulation compris entre 100 et 500 l/h correspondants à des vitesses respectives de 1 et 5 m/s. Dans ces conditions et par l'intermédiaire des sorties perméats de chaque carter, le débits de perméat est mesuré pour chacun des carter. Le tableau de la **Fig. 6** définit les conditions expérimentales et donne les valeurs de débit de filtrat obtenues.

Il apparaît que, quelle que soit la vitesse de circulation, le débit du tronçon dépend de la valeur de la pression. Cette dernière est la conséquence de la perte de charge de l'écoulement du fluide à l'intérieur de la membrane. Le rapport du débit du tronçon d'entrée sur le débit du tronçon de sortie augmente avec la vitesse de circulation pour atteindre la valeur 1,82 à une vitesse de 5 m/s.

La description qui suit vise à fournir trois exemples de réalisation de membrane conforme à l'invention.

## Exemple de réalisation 1 selon l'invention

Cet exemple correspond à la pénétration à l'intérieur du support **2** d'une suspension de particules qui peut également servir à réaliser une couche de séparation **5.**

Une suspension de particules d'oxyde de titane dont la granulométrie est de 0,5 μm est préparée. Cette suspension est défloculée à l'aide d'un agent spécifique appelé COATEX qui sépare les particules entre-elles et supprime toute sédimentation. Aucun liant organique n'est ajouté afin d'obtenir une viscosité très basse.

Des supports monocanaux de diamètre externe 10 mm et de diamètre interne 6 mm et de longueur 1200 mm sont utilisés. Ces supports poreux possèdent un diamètre moyen équivalent des pores de 5 μm et ils sont identiques à celui pris précédemment comme référence. Ces supports sont alors soumis à une opération d'engobage. Les valeurs de **Tr, Ta** et **Tv** utilisées sont indiquées dans le tableau de la **Fig. 7.** Pour chaque triplet de valeurs de **Tr/Ta/Tv,** deux supports sont modifiés par pénétration de la suspension puis après séchage, sont calcinés à une température de l'ordre de 1100 °C. Les supports ainsi modifiés sont définis par leur triplet de valeurs **Tr/Ta/Tv,** soit par exemple 10/10/40.

Le premier support modifié de chaque série est mesuré en perméabilité à l'eau par l'intermédiaire du carter utilisé ci-dessus. Une seule vitesse (5 m/s) a été utilisée pour ces mesures.

Le deuxième support modifié est découpé de manière à faire des prélèvements sous la forme de minces tronçons (2 à 3 mm de hauteur) à des longueurs de 0 mm, 300 mm, 500 mm, 700 mm et 1178 mm. Ces tronçons sont destinés à la mesure de la pénétration à l'intérieur du support ainsi que de l'épaisseur du dépôt existant sur la surface interne 4 du support, si un tel dépôt existe.

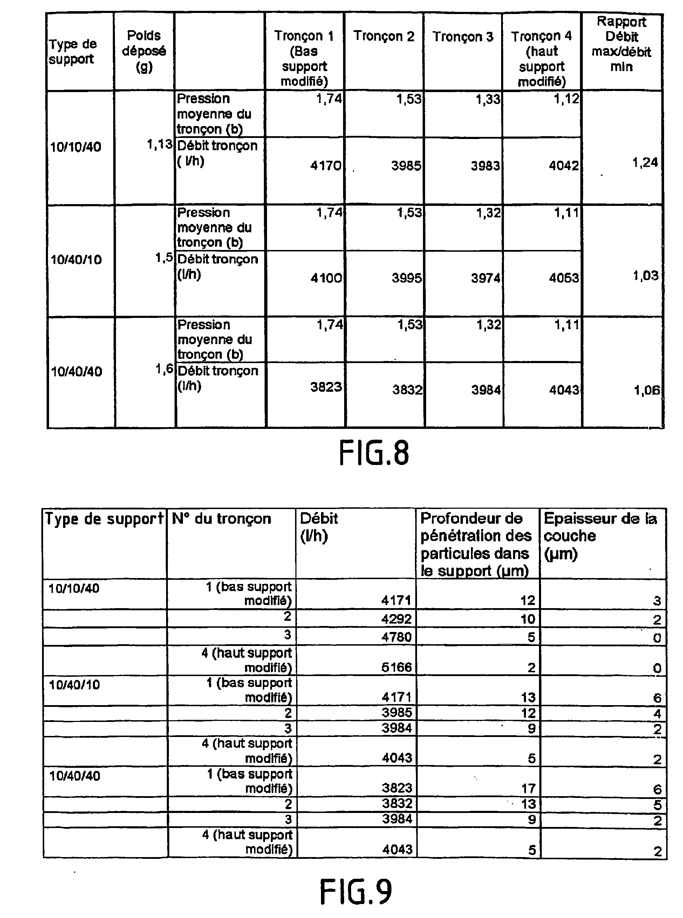

Le tableau de la **Fig. 8** présente les valeurs de débit selon les tronçons.

Les tronçons sont numérotés de 1 à 4, le n° 1 correspondant au bas du support durant l'opération d'engobage. Ces résultats montrent que, pour les membranes selon l'invention, par rapport à la référence ci-dessus, le débit par tronçon s'est considérablement uniformisé en fonction de l'ordre du tronçon. Ces résultats sont la conséquence directe du gradient de densité de flux par unité de pression qui vient compenser le gradient de pression existant le long du canal.

Les mesures de la pénétration des particules à l'intérieur de la porosité du support ont été effectuées sur les tronçons de faibles épaisseurs prélevés aux longueurs 0 mm, 300 mm, 700 mm et 1178 mm. Ces tronçons de faibles épaisseurs ont été remplis avec de la résine d'enrobage puis polis afin d'observer sur un seul plan la pénétration des particules à l'aide d'un microscope électronique à balayage.

Le tableau de la **Fig. 9** présente les mesures de pénétration des particules dans le support ainsi que l'épaisseur des couches. L'examen de ce tableau conduit à constater que les particules ont effectivement pénétré à l'intérieur de la porosité du support à partir de sa surface interne **4** et que la profondeur de pénétration est bien la conséquence du temps de contact avec la suspension. Comme indiqué précédemment, le temps de contact en un point du support dépend de la hauteur de ce point. Les résultats montent que la profondeur de pénétration varie comme ce temps de contact et que l'on obtient ainsi un gradient de profondeur de pénétration donc de densité de flux par unité de pression et de porosité favorisant ainsi l'homogénéité des débits de perméats.

Quand la profondeur de pénétration devient importante, les particules ne peuvent plus progresser au sein du support. Le support peut être considéré comme colmaté. Mais, comme l'aspiration capillaire se maintient, les particules continuent à arriver à la surface du support et constitue un dépôt. C'est ce que montre les valeurs de l'épaisseur de la couche correspondant à ce dépôt qui sont égales à zéro quand le temps de contact est faible, puis deviennent positives et mêmes importantes pour des valeurs élevées de ce temps de contact. Le dépôt peut correspondre à la couche de séparation **5** de la membrane.

## Exemple de réalisation 2 selon l'invention :

Dans cet exemple, les particules inorganiques utilisées pour l'étape de pénétration ne peuvent pas servir à réaliser une couche de séparation **5.** Dans ce cas, l'invention évite la formation d'un dépôt.

Des supports monocanaux de diamètre externe 10 mm et de diamètre interne 6 mm et de longueur 1200 mm sont utilisés. Ces supports poreux possèdent un diamètre moyen équivalent des pores de 5 μm et ils sont identiques à celui pris précédemment comme référence.

Les particules inorganiques utilisées sont des particules d'oxyde de titane possédant un diamètre moyen de particules de 1 μm. Ce diamètre est obtenu après un broyage énergique dans une jarre contenant des boulets de diamètre 5 mm en alumine. Ces particules sont défloculées par l'intermédiaire d'un adjuvant de la famille des COATEX. La suspension ne contient aucun liant organique et la concentration de particules est inférieure à 50 g/l. Les valeurs de ces deux paramètres sont destinées à obtenir une viscosité très basse.

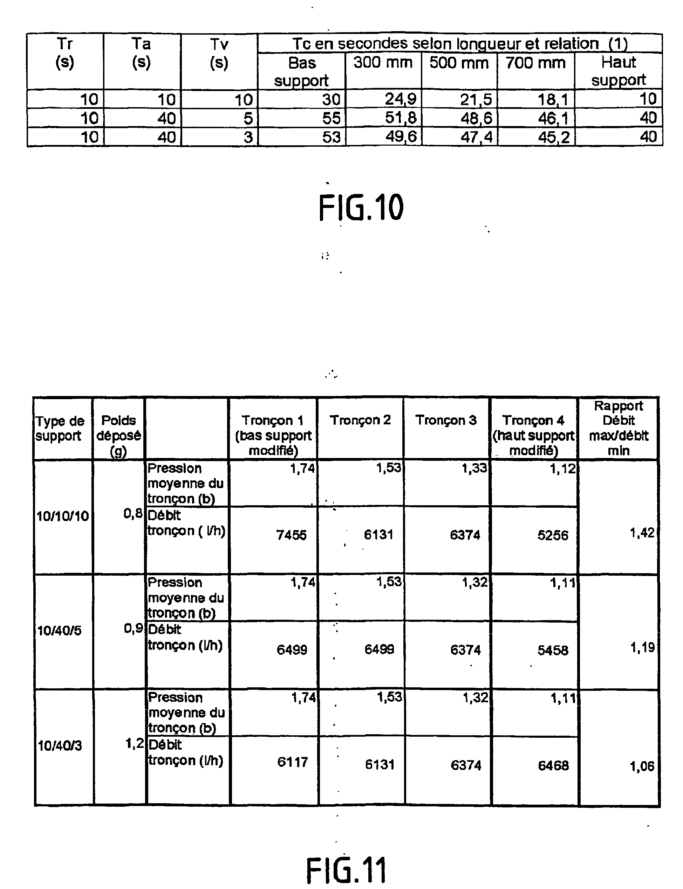

Les supports sont modifiés par engobage à l'aide de cette suspension, selon les conditions expérimentales du dépôt définies dans le tableau de la **Fig. 10.**

Dans cette série de réalisation de pénétration de particules au sein du support **2,** la vitesse de vidange a été augmentée de manière significative, afin de réaliser une contrainte de cisaillement à la paroi de la membrane et ainsi éroder le dépôt qui pourrait avoir tendance à se former. Les trois temps 10s, 5s et 3s de vidange correspondent respectivement à des vitesses de 0,117 m/s, 0,234 m/s et 0,39 m/s.

Trois supports sont réalisés pour chaque triplet **Tr/TaTv.** Ces supports modifiés sont calcinés à 1100 °C, puis deux d'entre eux subissent les mêmes prélèvements et mesures que dans l'exemple de réalisation 1 ci-dessus, le troisième étant destiné à recevoir un dépôt de couche séparatrice **5** pour le transformer en membrane.

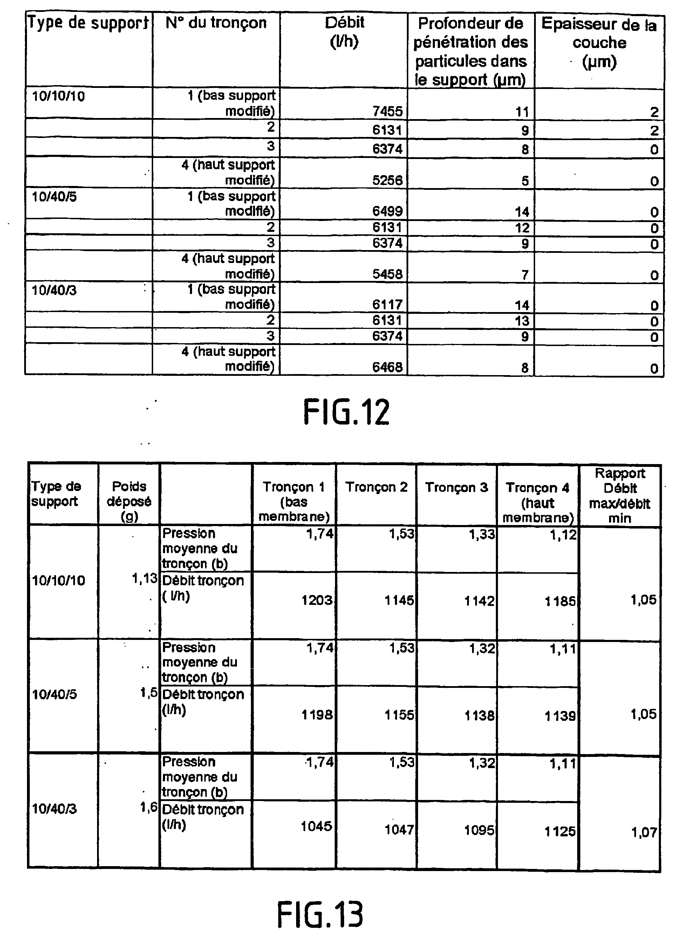

Le tableau de la **Fig. 11** présente les valeurs de débits mesurées sur ces supports modifiés. Les valeurs de débit obtenues par cette méthode sont moins homogènes qu'avec la méthode précédente mais elles restent bien meilleures que celles de la référence. La vitesse de vidange améliore l'homogénéité des débits et représente donc un paramètre important. Les profondeurs des différentes pénétrations ainsi que les épaisseurs des dépôts s'ils existent ont été déterminées selon la méthode précédente. Le tableau de la **Fig.12** présente les résultats obtenus. Ce tableau montre que la pénétration des particules de 1 $\mu$m est moins importante que celle de l'exemple précédent avec des particules de 0,5 $\mu$m. Quelle que soit le type de support modifié, la pénétration dans le bas de ce dernier est toujours plus importante que dans le haut, créant ainsi un gradient de porosité et donc de densité de flux par unité de pression favorable à l'obtention de débits homogènes.

Sur le troisième support modifié, le dépôt d'une couche de séparation présentant un diamètre moyen de pores de 0,2 $\mu$m a été réalisé.

Après dépôt, séchage et frittage, les résultats obtenus avec le carter utilisé dans la mesure du support par tronçon sont présentés à la **Fig. 13.** Durant ces mesures, la vitesse de circulation a été de 5 m/s. L'homogénéité observée sur les supports modifiés se retrouve sur la membrane. Ce résultat est normal car le dépôt qui constitue la membrane est très régulier, ce qui correspond à ajouter à chaque tronçon du support modifié une résistance hydraulique ou perméabilité sensiblement identique.

**Exemple de réalisation 3 selon l'invention :**

Dans cet exemple, deux poudres de particules de diamètre moyen différent sont utilisées. Deux suspensions de ces deux poudres sont mises en contact avec le support l'une après l'autre de manière à accroître le colmatage du support, sans faire apparaître un dépôt à la surface des canaux. Les particules de diamètre plus élevé sont utilisées en premier.

Une première pénétration selon l'exemple de réalisation **2** est effectuée.

Des supports monocanaux de diamètre externe 10 mm et de diamètre interne 6 mm et de longueur 1200 mm réalisés dans l'exemple de réalisation **2** sont utilisés. Toutefois, seuls les supports référencés 10/40/5 et 10/40/3 sur lesquels aucun dépôt n'existe à la surface des canaux sont utilisés.

Les secondes particules utilisées sont des particules d'oxyde de titane possédant un diamètre moyen de particules de 0,1 $\mu$m. La poudre est défloculée par l'intermédiaire d'un adjuvant de la famille des COATEX. La suspension ne contient aucun liant organique et la concentration de la poudre est inférieure à 20 g/l. Les valeurs de ces deux paramètres sont destinées à obtenir une viscosité très basse.

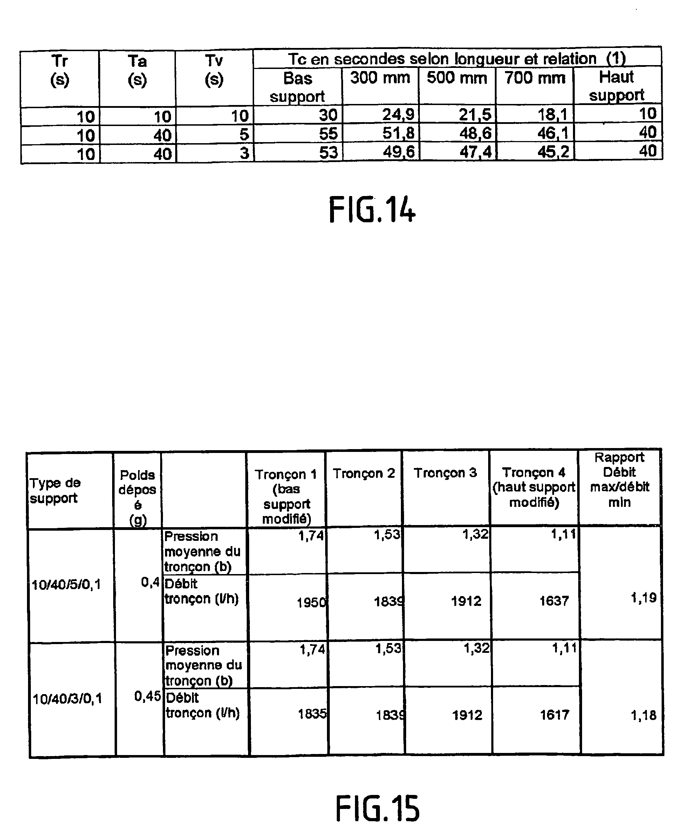

Les conditions expérimentales de l'engobage effectué avec cette deuxième suspension sont définies dans le tableau de la **Fig. 14.** Ces conditions sont.identiques à celle de l'exemple 2 pour éviter la formation d'un dépôt. Comme dans l'exemple 1, trois supports sont réalisés pour chaque triplet **Tr/Ta/Tv.** Ces supports modifiés sont calcinés à 900 °C puis soumis aux mêmes prélèvements et mesures que dans l'exemple de réalisation **2** ci-dessus. Le tableau de la **Fig.15** présente les valeurs de débits mesurées sur ces supports modifiés. Afin de les différencier de l'exemple précédent, la notation /0,1 a été ajouté dans la référence de chaque support modifié. Il apparaît que la pénétration d'une poudre fine à l'intérieur d'un colmatage constitué avec des grosses: particules a des conséquences très importantes sur le débit des tronçons puisque les valeurs de ces débits sont les plus faibles de la série des exemples de réalisation de l'invention. Par rapport aux valeurs de référence du tableau de la **Fig. 6**, les valeurs du tableau de la **Fig. 15** sont environ 3 ou 4 fois plus faibles, montrant ainsi l'efficacité de la double pénétration à partir de deux poudres de granulométrie très différentes.

Comme dans l'exemple 2, la vitesse élevée de vidange favorise l'homogénéité des débits. La pénétration de la poudre la plus fine n'a pu être déterminée, car il est peu aisé de distinguer les particules de granulométrie importante des particules de granulométrie plus faible, après frittage. Toutefois, aucun dépôt n'a été observé sur la surface interne **4** du support **2.**

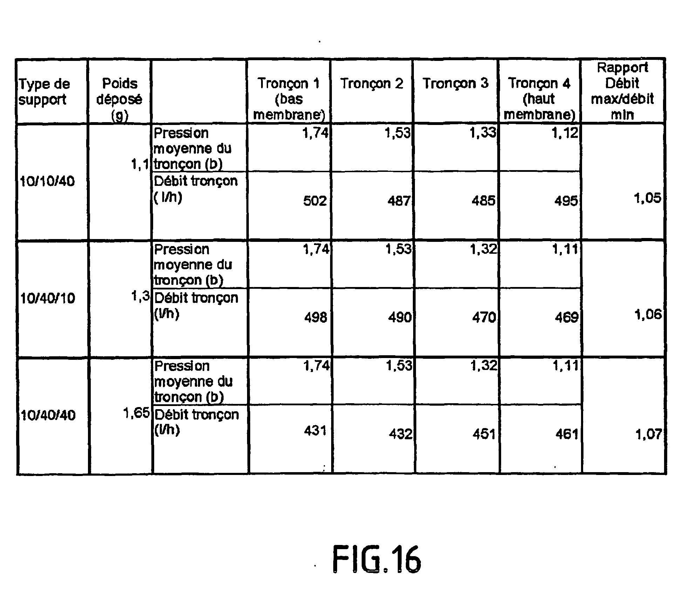

Sur le troisième support modifié, un dépôt permettant d'obtenir une couche de séparation de diamètre moyen de pores de 0,2 $\mu$m a été effectué. Après frittage, cette nouvelle membrane est testée et les valeurs obtenues sont présentées dans le tableau de la **Fig. 16.** Les valeurs des débits des tronçons pour chaque membrane sont homogènes. De plus, par rapport aux valeurs présentées au tableau de la **Fig. 8** obtenues pour l'exemple de réalisation 1 dans lequel une membrane de diamètre de pores identique a été réalisée, on observe que le débit des tronçons est considérablement plus faible, d'environ un rapport 2. Ce rapport montre un intérêt supplémentaire de l'invention car elle permet d'obtenir des débits très différents pour une même couche membranaire et un support avant modification identique.

**Revendications**

1. Membrane pour la filtration tangentielle d'un fluide à traiter, ladite membrane comportant un support poreux **(2)** délimitant au moins un canal de circulation **(3)** pour le fluide à traiter circulant dans un sens donné **(f)** entre une entrée **(6)** et une sortie **(7),** la surface interne **(4)** du support poreux **(2)** délimitant le canal **(3)** étant recouverte par au moins une couche de séparation **(5)** pour le fluide à traiter, une fraction appelée perméat traversant la couche de séparation **(5)** et le support poreux **(2),**
**caractérisée en ce que** le support présente un colmatage **(c)** partiel variable s'étendant à partir de la surface interne **(4)** du support **(2)** sur laquelle la couche de séparation **(5)** est déposée, cedit colmatage créant, sur une tranche **(8)** du support **(2)** d'épaisseur constante donnée **(e)** s'étendant à partir de la surface interne **(4)** du support **(2),** un gradient de porosité moyenne, selon le sens de circulation du fluide à traiter, la porosité moyenne minimale étant située à l'entrée **(6)** et la porosité moyenne maximale à la sortie **(7).**

2. -Membrane selon la revendication 1, **caractérisée en ce que** le colmatage **(c)** partiel variable crée sur une tranche **(8)** du support **(2)** d'épaisseur donnée **(e)** s'étendant à partir de la surface interne **(4)** du support **(2),** un gradient de densité de flux par unité de pression, selon le sens de circulation du fluide à traiter, la densité de flux par unité de pression minimale étant située à l'entrée **(6)** et la densité de flux par unité de pression maximale à la sortie **(7).**

3. Membrane selon la revendication 1, **caractérisée en ce que** la porosité moyenne du support **(2)** augmente lorsque l'on se déplace à l'intérieur du support, transversalement au sens de circulation du fluide à traiter, entre la surface interne **(4)** et la surface externe **($2_1$)** du support **(2).**

4. Membrane selon l'une des revendications 1 à 3, **caractérisée en ce que** le colmatage (c) partiel variable de la tranche **(8)** est réalisé sur une profondeur **(p),** à partir de la surface interne **(4)** du support **(2)**, qui diminue selon le sens de circulation **(f)** du fluide à traiter entre l'entrée **(6)** et la sortie **(7).**

5. Membrane selon l'une des revendications 1 à 3, **caractérisée en ce que** le colmatage (c) partiel variable de la tranche **(8)** est dû à une augmentation du diamètre moyen des pores de la tranche **(8)** selon le sens de circulation **(f)** du fluide à traiter entre l'entrée **(6)** et la sortie **(7).**

6. Membrane selon l'une des revendications 1 à 5, **caractérisée en ce que** le colmatage **(c)** partiel variable de la tranche **(8)** est obtenu par pénétration à partir de la surface interne **(4)** du support **(2)** de particules inorganiques de diamètre moyen inférieur au diamètre moyen **dp** des pores du support **(2).**

7. Membrane selon la revendication 6, **caractérisée en ce que** la pénétration de particules inorganiques est suivie d'un frittage.

8. Membrane selon la revendication 1 à 7, **caractérisée en ce que** la tranche **(8)** d'épaisseur constante **(e)** présente une porosité moyenne augmentant sensiblement de manière continue selon le sens de circulation **(f)** de fluide à traiter, entre l'entrée **(6)** et la sortie **(7)**, de façon à obtenir un débit de perméat sensiblement constant le long du canal **(3)** de circulation.

9. Membrane selon la revendication 1 à 7, **caractérisée en ce que** la tranche **(8)** d'épaisseur constante **(e)** présente une porosité moyenne augmentant par paliers **($P_i$)** selon le sens de circulation **(f)** du fluide à traiter, entre l'entrée **(6)** et la sortie **(7),** lesdits paliers étant, de préférence, tous de longueur prise selon le sens de circulation (f) sensiblement identique.

10. Procédé de fabrication d'une membrane pour filtration tangentielle d'un fluide à traiter, comportant un support poreux **(2)** délimitant au moins un canal **(3)** de circulation pour le fluide à traiter circulant selon un sens donné **(f)** entre une entrée **(6)** et une sortie **(7),** la surface interne **(4)** du support poreux **(2)** délimitant le canal **(3)** étant recouverte par au moins une couche de séparation **(5)** pour le fluide à traiter, **caractérisé en ce qu'**il comprend une étape consistant à modifier le support poreux **(2)** par pénétration, à partir de la surface interne **(4)** du support poreux **(2)** délimitant le canal **(3),** de particules inorganiques de diamètre moyen inférieur au diamètre moyen **dp** des pores du support **(2),** de façon à obtenir sur une tranche **(8)** d'épaisseur constante donnée **(e)** s'étendant à partir de la surface interne **(4)** du support **(2),** un gradient de porosité moyenne, selon le sens de circulation du fluide à traiter, la porosité moyenne minimale étant située à l'entrée **(6)** et la porosité moyenne maximale à la sortie **(7).**

**11.** Procédé selon la revendication 10, **caractérisé en ce que** l'étape consistant à modifier le support poreux **(2)** par pénétration est suivie d'une étape de frittage.

**12.** Procédé selon la revendication 10 ou 11 **caractérisé en ce que** la valeur du gradient de porosité moyenne de la tranche **(8)** est choisi en fonction de la valeur du gradient de la pression du fluide à traiter circulant dans le canal **(3),** afin d'obtenir un débit de perméat sensiblement constant le long du canal (3) de circulation.

**13.** Procédé selon l'une des revendications 10 à 12, **caractérisé en ce que** le diamètre moyen des particules inorganiques est compris entre **dp**/100 et **dp/2.**

**14.** Procédé selon l'une des revendications 10 à 13, **caractérisé en ce que** la pénétration est réalisée, de sorte que les particules inorganiques pénètrent à l'intérieur des pores de la tranche **(8)** sur une profondeur **(p),** à partir de la surface interne **(4)** du support **(2)** sur laquelle la couche de séparation **(5)** est déposée, qui diminue selon le sens de circulation **(f)** du fluide à traiter entre l'entrée **(6)** et la sortie **(7).**

**15.** Procédé selon la revendication 14, **caractérisé en ce qu'**il consiste à assurer la pénétration des particules inorganiques à partir de la surface interne **(4)** du support poreux **(2) :**

- en disposant verticalement le support poreux **(2)**, l'extrémité basse du support correspondant à l'entrée **(6)** et l'extrémité haute du support à la sortie **(7)**,
- en remplissant le canal **(3)** par une suspension défloculée des particules inorganiques,
- et en vidant le canal **(3)** progressivement, en vue d'obtenir un temps de contact **Tc**, entre la suspension de particules inorganiques et la surface interne **(4)** du support **(2)**, qui augmente progressivement, afin d'obtenir une profondeur **(p)** de pénétration, à partir de la surface interne **(4)** du support **(2)**, qui diminue selon le sens de circulation **(f)** du fluide à traiter entre l'entrée **(6)** et la sortie **(7)**, c'est à dire entre l'extrémité basse et l'extrémité haute du support poreux **(2)**.

**16.** Procédé selon la revendication 15, **caractérisé en ce que** le gradient de porosité moyenne sur la tranche **(8)** d'épaisseur constante donnée **(e)** est réalisé par pénétrations successives d'une première série de particules inorganiques dont le diamètre moyen $d_1$ est compris entre **dp**/100 et **dp**/2, puis d'une deuxième série de particules inorganiques dont le diamètre moyen $d_2$ est compris entre $d_1$/100 et $d_1$/2.

**17.** Procédé selon l'une des revendications 10 à 16, **caractérisé en ce que**, simultanément à la pénétration, un dépôt des particules inorganiques est réalisé sur la surface interne **(4)** du support, ce dépôt constituant après frittage la couche de séparation **(5).**

**Claims**

**1.** Membrane for tangential filtration of a fluid to be treated, said membrane comprising a porous support **(2)** delimiting at least one flow channel **(3)** for the fluid to be treated flowing in a given direction **(f)** between an inlet **(6)** and an outlet **(7),** the inner surface **(4)** of the porous support **(2)** which delimits channel **(3)** being coated with at least one separator layer **(5)** for the fluid to be treated, a fraction called a permeate passing through the separator layer **(5)** and the porous support **(2), characterized in that** the support has variable, partial pore-filling **(c)** extending from the inner surface **(4)** of support **(2)** on which the separator layer **(5)** is deposited, this said partial pore-filling, on a portion **(8)** of support **(2)** of a given constant thickness **(e)** extending from the inner surface **(4)** of support **(2),** creating a mean porosity gradient in the direction of flow of the fluid to be treated, the minimum mean porosity being located at the inlet **(6)** and the maximum mean porosity at the outlet **(7).**

**2.** Membrane as in claim 1, **characterized in that** the variable partial pore-filling **(c)** on portion **(8)** of support **(2)** of given thickness **(e)** extending from the inner surface **(4)** of support **(2),** creates a flux density gradient per unit of pressure in the direction of flow of the fluid to be treated, the minimum flux density per unit of pressure being located at the inlet **(6)** and the maximum flux density per unit of pressure at the outlet **(7).**

3. Membrane as in claim 1, **characterized in that** the mean porosity of the support **(2)** increases inside the support in a direction that is transverse to the direction of flow of the fluid to be treated, between the inner surface **(4)** and the outer surface **(2$_1$)** of support **(2)**.

4. Membrane as in any of claims 1 to 3, **characterized in that** the variable, partial pore-filling **(c)** of portion **(8)** is made over a depth **(p),** from the inner surface **(4)** of the support **(2),** which decreases in the direction of flow **(f)** of the fluid to be treated between the inlet **(6)** and the outlet **(7).**

5. Membrane as in any of claims 1 to 3, **characterized in that** the variable partial pore-filling **(c)** of portion **(8)** is due to an increase in the mean pore diameter of portion **(8)** in the direction of flow **(f)** of the fluid to be treated between the inlet **(6)** and the outlet **(7).**

6. Membrane as in any of claims 1 to 5, characterized on that the variable, partial pore-filling **(c)** of portion **(8)** is obtained by the penetration, from inner surface **(4)** of support **(2),** of inorganic particles whose mean diameter is smaller than the mean pore diameter **dp** of the support **(2).**

7. Membrane as in claim 6, **characterized in that** the penetration of inorganic particles is followed by sintering.

8. Membrane as in claims 1 to 7, **characterized in that** portion **(8)** of constant thickness **(e)** has a mean porosity which increases in substantially continuous manner in the direction of flow **(f)** of the fluid to be treated, between inlet **(6)** and outlet **(7),** so as to obtain a substantially constant permeate flow rate along the length of the flow channel **(3).**

9. Membrane as in claims 1 to 7, **characterized in that** portion **(8)** of constant thickness **(e)** has a mean porosity which increases in plateaus **(P$_i$)** in the direction of flow **(f)** of the fluid to be treated, between the inlet **(6)** and the outlet **(7),** the length of said plateaus taken in the direction of flow **(f)** preferably being substantially identical.

10. Method for fabricating a membrane for the tangential filtration of a fluid to be treated, comprising a porous support **(2)** delimiting at least one flow channel **(3)** for the fluid to be treated flowing in a given direction **(f)** between an inlet **(6)** and an outlet **(7),** the inner surface **(4)** of the porous support **(2)** which delimits the channel **(3)** being coated with at least one separator layer **(5)** for the fluid to be treated, **characterized in that** it comprises a step consisting of modifying the porous support **(2)** by the penetration, from the inner surface **(4)** of porous support **(2)** delimiting channel **(3),** of inorganic particles whose mean diameter is smaller than the mean pore diameter **dp** of the support **(2),** so that on a portion **(8)** of a given constant thickness **(e)** extending from the inner surface **(4)** of support **(2),** it is possible to obtain a mean porosity gradient in the direction of flow of the fluid to be treated, the minimum mean porosity being located at the inlet **(6)** and the maximum mean porosity at the outlet **(7).**

11. Method as in claim 10, **characterized in that** the step consisting of modifying the porous support **(2)** by penetration is followed by a sintering step.

12. Method as in claim 10 or 11 **characterized in that** the value of the mean porosity gradient of portion **(8)** is chosen in relation to the value of the pressure gradient of the fluid to be treated flowing in channel (3), in order to obtain a permeate flow rate that is substantially constant along the length of the flow channel (3).

13. Method as in any of claims 10 to 12, **characterized in that** the mean diameter of the inorganic particles lies between **dp/100** and **dp/2.**

14. Method as in any of claims 10 to 13, **characterized in that** penetration is made so that the inorganic particles penetrate inside the pores of portion **(8)** over a depth (p), from the inner surface **(4)** of support **(2)** on which the separator layer **(5)** is deposited, which decreases in the direction of flow **(f)** of the fluid to be treated between the inlet **(6)** and the outlet **(7).**

15. Method as in claim 14, **characterized in that** it consists of ensuring the penetration of inorganic particles from the inner surface **(4)** of the porous support (2):

- by arranging the porous support **(2)** vertically, the lower end of the support corresponding to the inlet **(6)** and the upper end of the support to the outlet **(7),**
- by filling channel **(3)** with a deflocculated suspension of inorganic particles,
- and by emptying channel **(3)** progressively, with a view to obtaining a contact time **Tc,** between the suspension of inorganic particles and the inner surface **(4)** of the support **(2),** which increases progressively in order to obtain a penetration depth **(p),** from the inner surface **(4)** of support **(2)**, which decreases in the direction of flow (f) of the fluid to be treated between the inlet **(6)** and the outlet **(7),** i.e. between the lower end and the upper end of the porous support **(2).**

16. Method as in claim 15, **characterized in that** the mean porosity gradient on portion **(8)** of given constant thickness **(e)** is obtained by successive penetrations of a first series of inorganic particles whose mean diameter $d_1$ lies between **dp**/100 and **dp/2,** then of a second series of inorganic particles whose mean diameter $d_2$ lies between $d_1$/100 and $d_1$/2.

17. Method as in any of claims 10 to 16, **characterized in that**, simultaneously with penetration, inorganic particles are deposited on the inner surface **(4)** of the support, this deposit after sintering forming the separator layer **(5).**

**Patentansprüche**

1. Membran für die Tangentialfiltration eines zu behandelnden Fluids, wobei die Membran einen porösen Träger (2) umfaßt, der wenigstens einen Zirkulationskanal (3) für das zu behandelnde Fluid, das in einer gegebenen Richtung (f) zwischen einem Eingang (6) und einem Ausgang (7) zirkuliert, begrenzt, wobei die den Kanal (3) begrenzende Innenseite (4) des porösen Trägers (2) mit wenigstens einer Trennschicht (5) für das zu behandelnde Fluid überzogen ist, wobei eine als Permeat bezeichnete Fraktion die Trennschicht (5) und den porösen Träger (2) durchläuft, **dadurch gekennzeichnet, daß** der Träger eine veränderliche Teilverstopfung (c) aufweist, die ausgehend von der Innenseite (4) des Trägers (2), auf der die Trennschicht (5) abgeschieden ist, verläuft, wobei diese Verstopfung an einem Rand (8) des Trägers (2) mit gegebener konstanter Dicke (e), der sich von der Innenseite (4) des Trägers (2) aus erstreckt, einen Gradienten der mittleren Porosität entlang der Zirkulationsrichtung des zu behandelnden Fluids erzeugt, wobei die minimale mittlere Porosität am Eingang (6) und die maximale mittlere Porosität am Ausgang (7) vorliegt.

2. Membran nach Anspruch 1, **dadurch gekennzeichnet, daß** die veränderliche Teilverstopfung (c) an einem Rand (8) des Trägers (2) mit gegebener Dicke (e), der sich von der Innenseite (4) des Trägers (2) aus erstreckt, einen Gradienten der Flußdichte pro Druckeinheit entlang der Zirkulationsrichtung des zu behandelnden Fluids erzeugt, wobei die minimale Flußdichte pro Druckeinheit am Eingang (6) und die maximale Flußdichte pro Druckeinheit am Ausgang (7) vorliegt.

3. Membran nach Anspruch 1, **dadurch gekennzeichnet, daß** die mittlere Porosität des Trägers (2) zunimmt, wenn man sich in dem Träger, quer zur Zirkulationsrichtung des zu behandelnden Fluids, zwischen der Innenseite (4) und der Außenseite ($2_1$) des Trägers (2) bewegt.

4. Membran nach einem der Ansprüche 1 bis 3, **dadurch gekennzeichnet, daß** die veränderliche Teilverstopfung (c) des Randes (8) ausgehend von der Innenseite (4) des Trägers (2) über eine Tiefe (p) hergestellt ist, die entlang der Zirkulationsrichtung (f) des zu behandelnden Fluids zwischen dem Eingang (6) und dem Ausgang (7) abnimmt.

5. Membran nach einem der Ansprüche 1 bis 3, **dadurch gekennzeichnet, daß** die veränderliche Teilverstopfung (c) des Randes (8) auf eine Zunahme des mittleren Durchmessers der Poren des Randes (8) entlang der Zirkulationsrichtung (f) des zu behandelnden Fluids zwischen dem Eingang (6) und dem Ausgang (7) zurückzuführen ist.

6. Membran nach einem der Ansprüche 1 bis 5, **dadurch gekennzeichnet, daß** die veränderliche Teilverstopfung (c) des Randes (8) dadurch erreicht wird, daß anorganische Teilchen mit einem mittleren Durchmesser, der kleiner als der mittlere Durchmesser dp der Poren des Trägers (2) ist, von der Innenseite (4) des Trägers (2) aus eindringen.

7. Membran nach Anspruch 6, **dadurch gekennzeichnet, daß** sich an das Eindringen von anorganischen Teilchen ein Sintern anschließt.

8. Membran nach Anspruch 1 bis 7, **dadurch gekennzeichnet, daß** der Rand (8) mit konstanter Dicke (e) eine mittlere Porosität aufweist, die entlang der Zirkulationsrichtung (f) von zu behandelndem Fluid zwischen dem Eingang (6) und dem Ausgang (7) im wesentlichen kontinuierlich zunimmt, um einen im wesentlichen konstanten Permeatdurchsatz entlang dem Zirkulationskanal (3) zu erhalten.

9. Membran nach Anspruch 1 bis 7, **dadurch gekennzeichnet, daß** der Rand (8) mit konstanter Dicke (e) eine mittlere Porosität aufweist, die entlang der Zirkulationsrichtung (f) des zu behandelnden Fluids zwischen dem Eingang (6) und dem Ausgang (7) stufenweise ($P_i$) zunimmt, wobei die Stufen vorzugsweise alle eine - entlang der Zirkulationsrichtung (f) genommen - im wesentlichen identische Länge aufweisen.

**10.** Verfahren zur Herstellung einer Membran für die Tangentialfiltration eines zu behandelnden Fluids, die einen porösen Träger (2) umfaßt, der wenigstens einen Zirkulationskanal (3) für das zu behandelnde Fluid, das in einer gegebenen Richtung (f) zwischen einem Eingang (6) und einem Ausgang (7) zirkuliert, begrenzt, wobei die den Kanal (3) begrenzende Innenseite (4) des porösen Trägers (2) mit wenigstens einer Trennschicht (5) für das zu behandelnde Fluid überzogen ist, dadurch gekennzeichnet, daß es einen Schritt umfaßt, der darin besteht, den porösen Träger (2) dadurch zu modifizieren, daß anorganische Teilchen mit einem mittleren Durchmesser, der kleiner als der mittlere Durchmesser dp der Poren des Trägers (2) ist, von der Innenseite (4) des porösen Trägers (2) aus eindringen, um an einem Rand (8) mit gegebener konstanter Dicke (e), der sich von der Innenseite (4) des Trägers (2) aus erstreckt, einen Gradienten der mittleren Porosität entlang der Zirkulationsrichtung des zu behandelnden Fluids zu erhalten, wobei die minimale mittlere Porosität am Eingang (6) und die maximale mittlere Porosität am Ausgang (7) vorliegt.

**11.** Verfahren nach Anspruch 10, **dadurch gekennzeichnet, daß** sich an den Schritt, der darin besteht, den porösen Träger (2) durch Eindringen zu modifizieren, ein Sinterschritt anschließt.

**12.** Verfahren nach Anspruch 10 oder 11, **dadurch gekennzeichnet, daß** der Wert des Gradienten der mittleren Porosität des Randes (8) in Abhängigkeit des Wertes des Gradienten des Drucks des in dem Kanal (3) zirkulierenden zu behandelnden Fluids gewählt wird, um einen im wesentlichen konstanten Permeatdurchsatz entlang dem Zirkulationskanal (3) zu erhalten.

**13.** Verfahren nach einem der Ansprüche 10 bis 12, **dadurch gekennzeichnet, daß** der mittlere Durchmesser der anorganischen Teilchen im Bereich zwischen dp/100 und dp/2 liegt.

**14.** Verfahren nach einem der Ansprüche 10 bis 13, **dadurch gekennzeichnet, daß** das Eindringen derart realisiert wird, daß die anorganischen Teilchen in die Poren des Randes (8), ausgehend von der Innenseite (4) des Trägers (2), auf der die Trennschicht (5) abgeschieden ist, über eine Tiefe (p) eindringen, die entlang der Zirkulationsrichtung (f) des zu behandelnden Fluids zwischen dem Eingang (6) und dem Ausgang (7) abnimmt.

**15.** Verfahren nach Anspruch 14, **dadurch gekennzeichnet, daß** es darin besteht, das Eindringen der anorganischen Teilchen von der Innenseite (4) des porösen Trägers (2) aus sicherzustellen durch:

- vertikales Anordnen des porösen Trägers (2), wobei das untere Ende des Trägers dem Eingang (6) und das obere Ende des Trägers dem Ausgang (7) entspricht,
- Füllen des Kanals (3) mit einer ausgeflockten Suspension der anorganischen Teilchen und
- schrittweises Entleeren des Kanals (3), um eine Kontaktzeit Tc zwischen der Suspension aus anorganischen Teilchen und der Innenseite (4) des Trägers (2) zu erreichen, die progressive zunimmt, um eine Eindringtiefe (p) ausgehend von der Innenseite (4) des Trägers (2) zu erhalten, die entlang der Zirkulationsrichtung (f) des zu behandelnden Fluids zwischen dem Eingang (6) und dem Ausgang (7), das heißt zwischen dem unteren Ende und dem oberen Ende des porösen Trägers (2) abnimmt.

**16.** Verfahren nach Anspruch 15, **dadurch gekennzeichnet, daß** der Gradient der mittleren Porosität an dem Rand (8) mit gegebener konstanter Dicke (e) durch sukzessives Eindringen einer ersten Reihe von anorganischen Teilchen, deren mittlerer Durchmesser $d_1$ zwischen dp/100 und dp/2 liegt, dann einer zweiten Reihe von anorganischen Teilchen, deren mittlerer Durchmesser $d_2$ zwischen $d_1$/100 und $d_1$/2 liegt, gebildet wird.

**17.** Verfahren nach einem der Ansprüche 10 bis 16, **dadurch gekennzeichnet, daß** gleichzeitig mit dem Eindringen ein Überzug aus den anorganischen Teilchen auf der Innenseite (4) des Trägers ausgebildet wird, wobei dieser Überzug nach dem Sintern die Trennschicht (5) bildet.

FIG.1

FIG.2

FIG.3

| | Tronçons | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Densité de flux par unité de pression m³/m²/s/Pa ×10⁻⁸ | 2,60 | 2,61 | 2,62 | 2,61 | 2,59 | 2,64 | 2,59 | 2,60 | 2,61 | 2,63 | 2,66 | 2,70 |
| Epaisseur µm | 48 | 48 | 48 | 49 | 48 | 49 | 49 | 50 | 49 | 50 | 50 | 50 |
| Perméabilité de la couche m³/m²/s/m/Pa ×10⁻¹² | 2,00 | 2,012 | 2,018 | 2,048 | 1,982 | 1,861 | 2,02 | 2,074 | 2,044 | 2,123 | 2,16 | 2,21 |

$$\text{Densité de flux par unité de pression } m^3/m^2/s/Pa \times 10^{-8}$$

$$\text{Perméabilité de la couche } m^3/m^2/s/m/Pa \times 10^{-12}$$

## FIG.4

| Vitesse de circulation (m/s) | 1 | 2 | 3 | 4 | 5 |
|---|---|---|---|---|---|
| Perte de charge (b) | 0,20 | 0,30 | 0,45 | 0,60 | 0,85 |

## FIG.5

| | Tronçon 1 | Tronçon 2 | Tronçon 3 | Tronçon 4 | Rapport Débit entrée/débit sortie |
|---|---|---|---|---|---|
| V (m/s) | 1 | 1 | 1 | 1 | |
| Pression moyenne du tronçon (b) | 1,18 | 1,13 | 1,08 | 1,03 | |
| Débit tronçon (l/h) | 6630 | 6310 | 6026 | 4946 | 1,34 |
| V (m/s) | 2 | 2 | 2 | 2 | |
| Pression moyenne du tronçon (b) | 1,26 | 1,19 | 1,11 | 1,04 | |
| Débit tronçon (l/h) | 7120 | 6616 | 6234 | 5018 | 1,42 |
| V (m/s) | 3 | 3 | 3 | 3 | |
| Pression moyenne du tronçon (b) | 1,39 | 1,28 | 1,17 | 1,06 | |
| Débit tronçon (l/h) | 7848 | 7142 | 6552 | 5118 | 1,53 |
| V (m/s) | 4 | 4 | 4 | 4 | |
| Pression moyenne du tronçon (b) | 1,53 | 1,38 | 1,23 | 1,08 | |
| Débit tronçon (l/h) | 8568 | 7632 | 6868 | 5226 | 1,64 |
| V (m/s) | 5 | 5 | 5 | 5 | |
| Pression moyenne du tronçon (b) | 1,74 | 1,53 | 1,32 | 1,11 | |
| Débit tronçon (l/h) | 9864 | 8568 | 7416 | 5406 | 1,82 |

## FIG.6

| Tr (s) | Ta (s) | Tv (s) | Tc en secondes selon longueur et relation (1) | | | | |
|---|---|---|---|---|---|---|---|
| | | | Bas support | 300 mm | 500 mm | 700 mm | Haut support |
| 10 | 10 | 40 | 60 | 47,2 | 38,7 | 20,2 | 10 |
| 10 | 40 | 10 | 60 | 55 | 51,5 | 48,1 | 40 |
| 10 | 40 | 40 | 90 | 77,2 | 68,7 | 60,2 | 40 |

## FIG.7

| Type de support | Poids déposé (g) | | Tronçon 1 (Bas support modifié) | Tronçon 2 | Tronçon 3 | Tronçon 4 (haut support modifié) | Rapport Débit max/débit min |
|---|---|---|---|---|---|---|---|
| 10/10/40 | 1,13 | Pression moyenne du tronçon (b) | 1,74 | 1,53 | 1,33 | 1,12 | 1,24 |
| | | Débit tronçon ( l/h) | 4170 | 3985 | 3983 | 4042 | |
| 10/40/10 | 1,5 | Pression moyenne du tronçon (b) | 1,74 | 1,53 | 1,32 | 1,11 | 1,03 |
| | | Débit tronçon (l/h) | 4100 | 3995 | 3974 | 4053 | |
| 10/40/40 | 1,6 | Pression moyenne du tronçon (b) | 1,74 | 1,53 | 1,32 | 1,11 | 1,06 |
| | | Débit tronçon (l/h) | 3823 | 3832 | 3984 | 4043 | |

## FIG.8

| Type de support | N° du tronçon | Débit (l/h) | Profondeur de pénétration des particules dans le support (µm) | Epaisseur de la couche (µm) |
|---|---|---|---|---|
| 10/10/40 | 1 (bas support modifié) | 4171 | 12 | 3 |
| | 2 | 4292 | 10 | 2 |
| | 3 | 4780 | 5 | 0 |
| | 4 (haut support modifié) | 5166 | 2 | 0 |
| 10/40/10 | 1 (bas support modifié) | 4171 | 13 | 6 |
| | 2 | 3985 | 12 | 4 |
| | 3 | 3984 | 9 | 2 |
| | 4 (haut support modifié) | 4043 | 5 | 2 |
| 10/40/40 | 1 (bas support modifié) | 3823 | 17 | 6 |
| | 2 | 3832 | 13 | 5 |
| | 3 | 3984 | 9 | 2 |
| | 4 (haut support modifié) | 4043 | 5 | 2 |

## FIG.9

| Tr (s) | Ta (s) | Tv (s) | Tc en secondes selon longueur et relation (1) | | | | |
|---|---|---|---|---|---|---|---|
| | | | Bas support | 300 mm | 500 mm | 700 mm | Haut support |
| 10 | 10 | 10 | 30 | 24,9 | 21,5 | 18,1 | 10 |
| 10 | 40 | 5 | 55 | 51,8 | 48,6 | 46,1 | 40 |
| 10 | 40 | 3 | 53 | 49,6 | 47,4 | 45,2 | 40 |

# FIG.10

| Type de support | Poids déposé (g) | | Tronçon 1 (bas support modifié) | Tronçon 2 | Tronçon 3 | Tronçon 4 (haut support modifié) | Rapport Débit max/débit min |
|---|---|---|---|---|---|---|---|
| 10/10/10 | 0,8 | Pression moyenne du tronçon (b) | 1,74 | 1,53 | 1,33 | 1,12 | 1,42 |
| | | Débit tronçon ( l/h) | 7455 | 6131 | 6374 | 5256 | |
| 10/40/5 | 0,9 | Pression moyenne du tronçon (b) | 1,74 | 1,53 | 1,32 | 1,11 | 1,19 |
| | | Débit tronçon (l/h) | 6499 | 6499 | 6374 | 5458 | |
| 10/40/3 | 1,2 | Pression moyenne du tronçon (b) | 1,74 | 1,53 | 1,32 | 1,11 | 1,06 |
| | | Débit tronçon (l/h) | 6117 | 6131 | 6374 | 6468 | |

# FIG.11

| Type de support | N° du tronçon | Débit (l/h) | Profondeur de pénétration des particules dans le support (µm) | Epaisseur de la couche (µm) |
|---|---|---|---|---|
| 10/10/10 | 1 (bas support modifié) | 7455 | 11 | 2 |
| | 2 | 6131 | 9 | 2 |
| | 3 | 6374 | 8 | 0 |
| | 4 (haut support modifié) | 5256 | 5 | 0 |
| 10/40/5 | 1 (bas support modifié) | 6499 | 14 | 0 |
| | 2 | 6131 | 12 | 0 |
| | 3 | 6374 | 9 | 0 |
| | 4 (haut support modifié) | 5458 | 7 | 0 |
| 10/40/3 | 1 (bas support modifié) | 6117 | 14 | 0 |
| | 2 | 6131 | 13 | 0 |
| | 3 | 6374 | 9 | 0 |
| | 4 (haut support modifié) | 6468 | 8 | 0 |

## FIG.12

| Type de support | Poids déposé (g) | | Tronçon 1 (bas membrane) | Tronçon 2 | Tronçon 3 | Tronçon 4 (haut membrane) | Rapport Débit max/débit min |
|---|---|---|---|---|---|---|---|
| 10/10/10 | 1,13 | Pression moyenne du tronçon (b) | 1,74 | 1,53 | 1,33 | 1,12 | |
| | | Débit tronçon ( l/h) | 1203 | 1145 | 1142 | 1185 | 1,05 |
| 10/40/5 | 1,5 | Pression moyenne du tronçon (b) | 1,74 | 1,53 | 1,32 | 1,11 | |
| | | Débit tronçon (l/h) | 1198 | 1155 | 1138 | 1139 | 1,05 |
| 10/40/3 | 1,6 | Pression moyenne du tronçon (b) | 1,74 | 1,53 | 1,32 | 1,11 | |
| | | Débit tronçon (l/h) | 1045 | 1047 | 1095 | 1125 | 1,07 |

## FIG.13

| Tr (s) | Ta (s) | Tv (s) | Tc en secondes selon longueur et relation (1) | | | | |
|---|---|---|---|---|---|---|---|
| | | | Bas support | 300 mm | 500 mm | 700 mm | Haut support |
| 10 | 10 | 10 | 30 | 24,9 | 21,5 | 18,1 | 10 |
| 10 | 40 | 5 | 55 | 51,8 | 48,6 | 46,1 | 40 |
| 10 | 40 | 3 | 53 | 49,6 | 47,4 | 45,2 | 40 |

# FIG.14

| Type de support | Poids déposé (g) | | Tronçon 1 (bas support modifié) | Tronçon 2 | Tronçon 3 | Tronçon 4 (haut support modifié) | Rapport Débit max/débit min |
|---|---|---|---|---|---|---|---|
| 10/40/5/0,1 | 0,4 | Pression moyenne du tronçon (b) | 1,74 | 1,53 | 1,32 | 1,11 | 1,19 |
| | | Débit tronçon (l/h) | 1950 | 1839 | 1912 | 1637 | |
| 10/40/3/0,1 | 0,45 | Pression moyenne du tronçon (b) | 1,74 | 1,53 | 1,32 | 1,11 | 1,18 |
| | | Débit tronçon (l/h) | 1835 | 1839 | 1912 | 1617 | |

# FIG.15

| Type de support | Poids déposé (g) | | Tronçon 1 (bas membrane) | Tronçon 2 | Tronçon 3 | Tronçon 4 (haut membrane) | Rapport Débit max/débit min |
|---|---|---|---|---|---|---|---|
| 10/10/40 | 1,1 | Pression moyenne du tronçon (b) | 1,74 | 1,53 | 1,33 | 1,12 | 1,05 |
| | | Débit tronçon ( l/h) | 502 | 487 | 485 | 495 | |
| 10/40/10 | 1,3 | Pression moyenne du tronçon (b) | 1,74 | 1,53 | 1,32 | 1,11 | 1,06 |
| | | Débit tronçon (l/h) | 498 | 490 | 470 | 469 | |
| 10/40/40 | 1,65 | Pression moyenne du tronçon (b) | 1,74 | 1,53 | 1,32 | 1,11 | 1,07 |
| | | Débit tronçon (l/h) | 431 | 432 | 451 | 461 | |

# FIG.16

**EP 1 562 694 B1**